Europäisches Patentamt

European Patent Office

Office européen des brevets

(19)

(11) **EP 0 812 059 B1**

(12) **FASCICULE DE BREVET EUROPEEN**

(45) Date de publication et mention
de la délivrance du brevet:
**26.02.2003 Bulletin 2003/09**

(51) Int Cl.⁷: **H02P 21/00**

(21) Numéro de dépôt: **97401181.9**

(22) Date de dépôt: **29.05.1997**

(54) **Procédé de contrôle commande d'une machine tournante, dispositif d'asservissement pour mettre en oeuvre ledit procédé et application du dispositif à une machine tournante**

Regelverfahren für eine Drehmaschine, Einrichtung zur Durchführung des Verfahrens und Anwendung der Einrichtung bei einer Drehmaschine

Control process for a rotary machine, device for carrying out this process and application of the system at a rotary machine

(84) Etats contractants désignés:
**AT BE CH DE DK ES FI GB GR IE IT LI LU MC NL PT SE**
Etats d'extension désignés:
**AL LT LV RO SI**

(30) Priorité: **06.06.1996 FR 9607015**

(43) Date de publication de la demande:
**10.12.1997 Bulletin 1997/50**

(73) Titulaire: **ALCATEL**
**75008 Paris (FR)**

(72) Inventeur: **Bornard, Guy,**
**c/o Lab. d'Automatique de Grenoble**
**38402 St Martin d'Heres (FR)**

(74) Mandataire: **Sciaux, Edmond et al**
**COMPAGNIE FINANCIERE ALCATEL**
**Département de la Propriété Industrielle,**
**30, Avenue Kléber**
**75116 Paris (FR)**

(56) Documents cités:
- **CHAPUIS Y A ET AL: "COMMANDE DIRECTE DU COUPLE D'UNE MACHINE ASYNCHRONE PAR LE CONTROLE DIRECT DE SON FLUX STATORIQUE DIRECT TORQUE CONTROL" JOURNAL DE PHYSIQUE III, vol. 5, no. 6, 1 juin 1995, pages 863-880, XP000533453**
- **BRANDSTETTER P ET AL: "CONTROL METHODS FOR PERMANENT MAGNET SYNCHRONOUS MOTOR DRIVES WITH HIGH DYNAMIC PERFORMANCE" EPE '95: 6TH. EUROPEAN CONFERENCE ON POWER ELECTRONICS AND APPLICATIONS, SEVILLA, SEPT. 19 - 21, 1995, vol. 3, 19 septembre 1995, EUROPEAN POWER ELECTRONICS AND DRIVES ASSOCIATION, pages 3.805-3.810, XP000538409**
- **MAZMIERKOWSKI M P ET AL: "IMPROVED DIRECT TORQUE AND FLUX VECTOR CONTROL OF PWM INVERTER-FED INDUCTION MOTOR DRIVES" IEEE TRANSACTIONS ON INDUSTRIAL ELECTRONICS, vol. 42, no. 4, 1 août 1995, pages 344-350, XP000530893**
- **HABETLER T G ET AL: "CONTROL STRATEGIES FOR DIRECT TORQUE CONTROL USING DISCRETE PULSE MODULATION" IEEE TRANSACTIONS ON INDUSTRY APPLICATIONS, vol. 27, no. 5, 1 septembre 1991, pages 893-901, XP000264056**

**Description**

L'invention concerne un procédé de contrôle commande d'une machine tournante, un dispositif d'asservissement destiné à mettre en oeuvre ledit procédé, et une machine tournante pourvue d'un tel dispositif. Plus précisément la présente invention concerne un procédé de contrôle en couple et un flux statorique d'une machine tournante.

On connaît des dispositifs de contrôle vectoriel du flux rotorique. Ce contrôle se base sur un contrôle effectif de l'état magnétique du rotor et du couple de la machine. Cependant ce type de dispositif nécessite la mise en place de capteur sur les parties tournantes de la machine afin de capter une grandeur mécanique nécessaire au calcul. En outre, ces dispositifs restent très sensibles aux variations de paramètres de la machine. Enfin ces dispositifs nécessitent l'utilisation de modulateur du type à largeur d'impulsions (MLI) qui entraîne un retard au niveau du temps de réponse de la machine lors d'un échelon en couple ou en vitesse.

On connaît (Chapuis Y. A. et al. ; 'Commande directe d'un couple d'une machine asynchrone par le contrôle direct de son flux statorique', Journal de Physique III, T. 5, n°6, juin 1995, pages 863 - 880) une méthode alternative où les grandeurs de contrôle sont le couple électromagnétique et le flux statorique. Cette méthode ne nécessite plus de MLI.

Cette méthode passe par la modélisation vectorielle de la machine et de l'onduleur de tension.

Pour la machine on sait que le couple électromagnétique est fonction de l'angle existant entre le vecteur tournant flux rotorique et le vecteur tournant flux statorique et les modules de ces vecteurs flux. Autrement dit le couple électromagnétique est fonction du produit vectoriel des vecteurs flux tournant :

$$T_{em} = K \left( \phi_r \times \phi_s \right)$$

Le vecteur tension stator $V_s$ est délivré par un onduleur de tension triphasée chaque phase comprenant un interrupteur à deux états (SP2LL) : Single Pole 2 Logic Levels / pôle unique à 2 niveaux logiques). De ce fait, le vecteur tension stator $V_s$ peut prendre 8 états $V_1...V_8$ ($2^3$), dont deux $V_1$, $V_8$ d'amplitude nulles (états nuls) dans le repère fixe statorique $(\alpha, \beta)$, en fonction de la combinaison des trois SP2LL de l'onduleur.

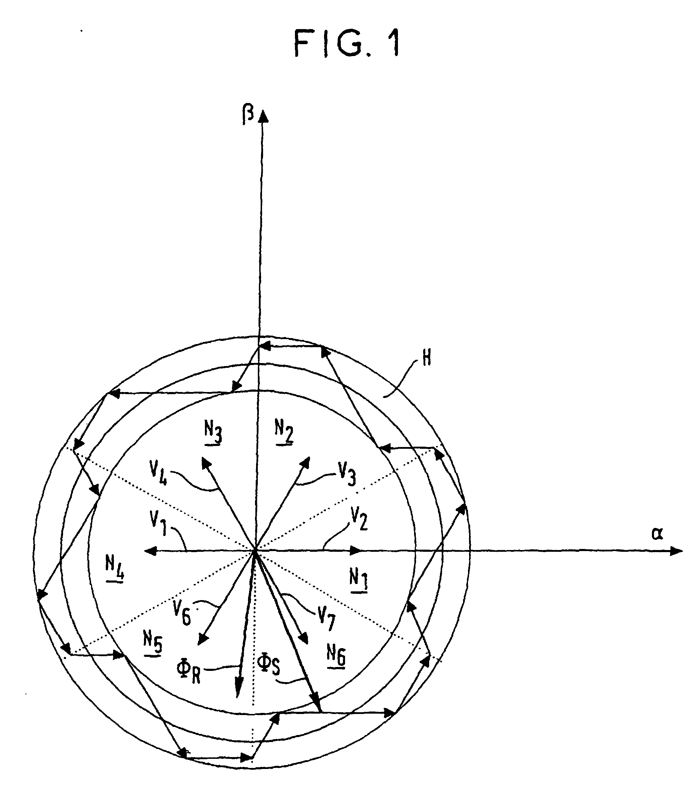

On connaît (Fig. 1) un système dit DTC (Direct Torque Control) reposant, dans le repère statorique $(\alpha, \beta)$, sur le maintien du module $|\phi_S|$ du vecteur tournant de flux statorique $\phi_S$ dans une bande d'hystérésis H, et sur le contrôle du couple $T_{em}$ en accélérant le vecteur tournant de flux statorique $\phi_S$ par rapport au vecteur de flux rotorique $\phi_R$ pour une augmentation du couple $T_{em}$ (augmentation de l'angle entre les deux vecteurs de flux) et en arrêtant le vecteur de flux statorique $\phi_S$ pour que le vecteur de flux rotorique $\phi_R$ le rattrape pour diminuer le couple (diminution de l'angle entre les deux vecteurs de flux).

Le contrôle du vecteur de flux statorique $\phi_S$ est assuré par l'intermédiaire d'une table finie. Cette table contient, pour une localisation $N_i$ (i = 1...6) donnée du vecteur de flux statorique $\phi_S$ tournant dans le plan du stator $(\alpha, \beta)$, les états $V_1...V_8$ du vecteur tension de phase stator $V_s$ qui permettent d'arrêter le vecteur flux statorique (états nuls $V_1$, $V_8$), et ceux qui permettent d'ouvrir l'angle entre les vecteurs de flux $\phi_S$, $\phi_R$, tout en maintenant le vecteur de flux statorique $\phi_S$ dans la bande d'hystérésis H. la table finie ci-dessous et la figure 1 illustre cette méthode.

| ZONE $N_i$ | $T_{em}$ croit | | $T_{em}$ décroît |
| --- | --- | --- | --- |
| | $\|\phi_S\|$ croit | $\|\phi_S\|$ décroît | $\phi_S$ arrêté |
| $N_1$ | $V_3$ | $V_4$ | $V_1$, $V_8$ |
| $N_2$ | $V_4$ | $V_5$ | $V_1$, $V_8$ |
| $N_3$ | $V_5$ | $V_6$ | $V_1$, $V_8$ |
| $N_4$ | $V_6$ | $V_7$ | $V_1$, $V_8$ |
| $N_5$ | $V_7$ | $V_2$ | $V_1$, $V_8$ |
| $N_6$ | $V_2$ | $V_3$ | $V_1$, $V_8$ |

**Table Finie**

Par exemple dans la figure 1, $\phi_S$ est dans la zone $N_6$ et son extrémité suit l'état $V_2$ du vecteur tension de phase stator $V_s$. L'état $V_2$ est un état qui fait croître $|\phi_S|$ le procédé commutera sur $V_3$ dès que $|\phi_S|$ aura atteint la limite supérieure de la bande d'hystérésis H.

Cette technique a plusieurs inconvénients à savoir :

* La table finie n'est pas exhaustive des situations dynamiques possibles de la machine tournante. Concevoir une table en vu d'une prise en compte exhaustive des situations de la machine est inconcevable (dans le cas simple d'un onduleur à trois SP2LL on obtient déjà six domaines dans chacun desquels 4 états peuvent être utilisés). En outre, un défaut de fonctionnement de l'un des SP2LL supprime trois des états possibles du vecteur de phase statorique $V_s$ ce qui réduit sensiblement la table finie de commande et peut amener la machine tournante dans une situation incontrôlable (pointe de couple).

* La technique proposée dédie le contrôle du flux statorique $\phi_S$ (maintien du module du flux statorique dans la bande d'hystérésis H) au Contrôle du couple $T_{em}$. Les configurations dans lesquelles on souhaite un contrôle du Flux statorique $\phi_S$ <u>concomitant</u> au contrôle du couple $T_{em}$ ne sont pas prévues.

* Dans le cas d'un échelon de couple négatif (réduction du couple en échelon) à faible vitesse de rotation du rotor, la dynamique de réponse de la solution ci-dessus est très mauvaise. Notamment, le temps de réponse à de l'échelon négatif est de l'ordre de quatre fois le temps de réponse d'un échelon positif de même amplitude.

En effet, dans une configuration de réduction du couple, le dispositif arrête la rotation du flux statorique (état nul) et le flux rotorique rattrape le flux statorique réduisant de ce fait l'angle et donc le couple. Lorsque l'on est à faible vitesse de rotation du moteur, le flux rotorique tourne, lui aussi, à faible vitesse, ce qui affecte sensiblement la dynamique de réponse en couple.

Cette configuration à faible vitesse de rotation peut être illustrée par le démarrage d'une motrice, la mauvaise dynamique par un patinage des roues de la motrice (réduction de couple trop lente).

* La stratégie de commutation de l'onduleur de tension est la même que l'on soit en régime transitoire (les valeurs instantanées du flux et du couple sont éloignées des valeurs de consigne) ou en régime établi (les valeurs instantanées du flux et du couple oscillent autour des valeurs de consigne). De ce fait la fréquence moyenne de découpage de l'onduleur de tension, en régime établi, n'est pas contrôlable et chaotique. Pour des tensions et des courants maximaux élevés cela peut amener rapidement à une détérioration irréversible de certains SP2LL et donc, pour les raisons précédemment cités, amener la machine tournante dans une situation incontrôlable.

L'un des buts de la présente invention est de proposer une méthode où, les grandeurs de contrôle étant aussi le couple électromagnétique et le flux statorique, quelle que soit la situation de la machine tournante à un temps donné, on fournit l'état du vecteur tension de phase stator $V_s$ optimal, parmi tous les états possibles, pour répondre au mieux à la stratégie de contrôle voulue.

A cet effet, l'invention concerne un procédé de régulation d'une machine tournante à n Phases alimentée en courant alternatif par l'intermédiaire d'un onduleur de tension, comprenant n SPmLL définissant m" états $V_i$ ($i \in \{1,.., m^n\}$) du vecteur tension de phase stator $V_s$, ladite machine étant asservie en couple électromagnétique $T_{em}$ et en flux statorique $\phi_s$ à un couple électromagnétique $T_{emref}$ et à un flux statorique $\phi_{sref}$ par un système d'asservissement comprenant un ensemble de capteurs dont les valeurs captées sont transmises à un observateur, les sorties de l'observateur étant injectées dans un calculateur, ledit calculateur restituant en sortie des signaux de commandes destinés à commander les SPmLL de l'onduleur de tension.

Selon l'invention, dans une stratégie de contrôle pour un régime transitoire dans lequel le couple électromagnétique $T_{em}$ et/ou le flux statorique $\phi_s$ sont éloignés respectivement du couple électromagnétique $T_{emref}$ et/ou du flux statorique $\phi_{sref}$ de consigne, le calculateur choisit parmi tous les états $V_i$ possibles du vecteur tension de phase stator $V_s$ celui qui est optimal pour amener le couple $T_{em}$ et le flux statorique $\phi_s$ vers le couple $T_{emref}$ et le flux statorique $\phi_{sref}$ de consigne et restitue des signaux de commandes pour commander les SPmLL selon l'état choisi du vecteur tension de phase $V_s$,

et dans une étape d'initialisation du procédé on construit dans le calculateur un plan virtuel de sortie P dont l'un des axes est représentatif du couple électromagnétique et l'autre axe est représentatif du flux stator, les consignes de couple et de flux statorique étant représentées par un point $A_{ref}$ et le couple et le flux statorique instantanés par un point A, un élément de plan ($\pm\Delta x$ , $\pm\Delta y$) étant défini autour du point $A_{ref}$,

et le calculateur utilise la stratégie de contrôle en régime établi lorsque le point A est à l'intérieur de l'élément de plan et la stratégie de contrôle en régime transitoire lorsque le point A est à l'extérieur de l'élément de plan, cette stratégie de contrôle en régime transitoire comprenant les étapes suivantes :

- on introduit dans le calculateur un modèle d'état de la machine tournante dans lequel le vecteur de sortie S est un vecteur du plan de sortie P et le vecteur de commande C est le vecteur de tension de phase $V_s$; et

- en régime transitoire, à chaque échantillonnage, le calculateur calcule le vecteur (A- $A_{ref}$ ), le calculateur calcule la dérivée directionnelle $\dot{S}$ du vecteur de S pour chacun des états $V_i$ possibles du vecteur tension de phase $V_s$,
- le calculateur calcule le produit scalaire de chacune des dérivées directionnelles $\dot{S}$ ($V_1$) du vecteur de sortie S avec le vecteur (A- $A_{ref}$),
- le calculateur choisit comme vecteur de commande C l'état $V_i$ du vecteur tension de phase $V_s$ associé au plus grand des produits scalaires calculés.

La dynamique de réponse à un différentiel de couple négatif est meilleure que dans l'art antérieur.

Lorsque n et/ou m ont des valeurs élevées cela génère de nombreux états possibles. l'invention a alors pour autre avantage que lorsque l'un des SPmLL est accidentellement bloqué dans une position qui n'est pas optimale pour une configuration donnée, le procédé continuera à choisir l'état le meilleur possible parmi les états possibles restants pour se rapprocher des consignes. Les performances dynamiques du contrôle en sont affecté, mais les risques de divergences ou de pointe de couple sont minimisés.

En outre, dans l'étape d'initialisation du procédé

on construit, dans le calculateur un chemin cyclique de circulation du point A autour du point $A_{ref}$ dans l'élément de plan,

on rentre dans le calculateur une fréquence moyenne de découpage pour l'onduleur,

le calculateur divise l'élément de plan en zones $Z_i$ de commutation adaptées au chemin cyclique,

le calculateur construit une table de commutation dans laquelle pour chaque zone $Z_i$ il fait correspondre l'état $V_f$ optimal futur du vecteur tension de phase stator $V_S$ en fonction des états actuel $V_a$ et passé $V_p$ du vecteur tension de phase stator $V_S$ pour suivre le chemin cyclique de circulation dans ladite zone $Z_i$; et en ce que,

en régime établi, et à chaque échantillonnage,

le calculateur calcule les tailles des zones $Z_i$ de commutation en fonction de la configuration instantanée de la machine, de manière à respecter la fréquence moyenne de découpage choisie,

le calculateur choisit comme vecteur de commande C l'état $V_f$ optimal futur du vecteur tension de phase stator $V_s$, à partir de la table de commutation, en fonction de la zone $Z_i$ où se trouve le point A, et des états actuel $V_a$ et passé $V_p$ du vecteur tension de phase stator $V_s$.

Dans un exemple de réalisation le modèle d'état de la machine tournante est un modèle d'état non linéaire, affine en la commande du type :

$$\dot{E} = f(E) + g(E)V_s$$

$$S = h(E)$$

où E est le vecteur d'état, f, g, h des fonctions analytiques du vecteur d'état E;
la dérivée directionnelle $\dot{S}$ du vecteur de sortie S est :

$$\dot{S}(V_s) = \frac{\partial h(E)}{\partial E}\, \dot{E} = \frac{\partial h(E)}{\partial E}\, f(E) + \frac{\partial h(E)}{\partial E}\, g(E)\, V_s$$

en fonction du modèle d'état.

Bien que basée sur un système à table de commutation le procédé, en régime établi, est relativement sûr. En effet, le point A peut être amené à diverger et à sortir de l'élément de plan. Le système balance alors vers le régime transitoire où l'état $V_i$ disponible optimal est choisi selon la stratégie de contrôle en régime transitoire.

Avantageusement l'élément de plan comprend une bande d'hystérésis ayant une borne intérieure et une borne extérieure telles que :

le basculement de la stratégie de contrôle en régime transitoire vers la stratégie de contrôle en régime établi se fait lorsque le point A a franchi la borne intérieure de la bande d'hystérésis; et
le basculement de la stratégie de contrôle en régime établi vers la stratégie de contrôle en régime transitoire se fait lorsque le point A a franchi la borne extérieure de la bande d'hystérésis.

Le contrôle de la fréquence moyenne de découpage de l'onduleur est un avantage permettant de limiter sensiblement les pertes par commutation dans les SPmLL et donc de prolonger leur durée de vie.

L'invention concerne aussi un système d'asservissement mettant en oeuvre le procédé ci-dessus décrit.

L'invention concerne enfin une machine tournante comprenant un tel système d'asservissement.

D'autres avantages et caractéristiques de la présente invention résulteront de la description qui va suivre en référence aux dessins annexés dans lesquels :

La figure 1 est une représentation schématique dans le plan statorique fixe du procédé de l'art antérieur.

La figure 2 est une représentation schématique du procédé selon l'invention pour un régime transitoire.

Les figures 3 à 3E sont des représentations schématiques du procédé selon l'invention pour un régime établi, à partir d'un cycle exemple donné.

L'invention concerne un procédé de régulation d'une machine tournante 1 à n Phases alimentée en courant alternatif par l'intermédiaire d'un onduleur de tension 3 comprenant n interrupteurs à m positions 4 (dans la suite SPmLL : Single Pole m Logic Levels / pôle unique à m niveaux logiques) définissant $m^n$ états $V_i$ (i$\in\{1,..,m^n\}$) du vecteur tension de phase stator $V_S$, ladite machine 1 étant asservie à un couple électromagnétique $T_{emref}$ et à un flux statorique $\phi_{Sref}$ de consigne.

Le système d'asservissement de la machine comprend un ensemble de capteurs dont les valeurs captées 7, 8, 9 sont transmises à un observateur 10. Les sorties de l'observateur 10 sont des valeurs représentatives du couple électromécanique $T_{em}$ et du flux statorique $\phi_S$ instantanés de la machine tournante. Il existe de nombreux capteurs et observateur 10 plus ou moins sophistiqués.

Les valeurs représentatives du couple électromagnétique $T_{em}$ et du flux statorique $\phi_S$ sont injectées dans le calculateur 13 mettant en oeuvre le procédé selon l'invention. Ce calculateur 13 reçoit aussi en entrées les valeurs représentatives des consignes $T_{emref}$, $\phi_{Sref}$ du couple électromécanique et du flux statorique. Le calculateur 13 restitue en sortie des signaux de commandes 6 destinés à commander les SPmLL 4 de l'onduleur de tension 3.

L'invention concerne plus exactement les étapes de procédé se déroulant dans le calculateur 13.

Le procédé selon l'invention propose deux stratégies de contrôle selon la configuration dans laquelle la machine se trouve. Il s'agit :

* du régime transitoire dans lequel le couple électromagnétique $T_{em}$ et/ou le flux statorique $\phi_S$ sont éloignés respectivement du couple électromagnétique $T_{emref}$ et/ou du flux statorique $\phi_{Sref}$ de consigne, et

* du régime établi dans lequel le couple $T_{em}$ et le flux statorique $\phi_S$ sont compris respectivement dans un intervalle $\pm\Delta T_{em}$ autour de $T_{emref}$ et dans un intervalle $\pm\Delta\phi_S$ autour de $\phi_{Sref}$.

Dans le régime transitoire le procédé selon l'invention comprend des étapes selon lesquelles :

on choisit parmi tous les états $V_i$ (i$\in\{1,..,m^n\}$) possibles du vecteur tension de phase stator $V_s$ celui qui est optimal pour amener le couple $T_{em}$ et le flux statorique $\phi_S$ vers le couple $T_{emref}$ et le flux statorique $\phi_{Sref}$ de consigne; et on commande la commutation des SPmLL correspondant à l'état choisi $V_i$ du vecteur tension de phase $V_s$.

Dans le régime établi, pour une fréquence moyenne de découpage de l'onduleur prédéterminée, on choisit, parmi tous les états $V_i$ (i$\in\{1,..,m^n\}$) possibles du vecteur tension de phase stator $V_s$ celui qui est optimal

pour minimiser les amplitudes des oscillations du couple $T_{em}$ et le flux statorique $\phi_S$ autour respectivement du couple $T_{emref}$ et du flux statorique $\phi_{Sref}$ de consigne, et/ ou

pour respecter un gabarit fréquenciel pour le couple $T_{em}$

on commande la commutation des SPmLL correspondant à l'état choisi $V_i$ du vecteur tension de phase $V_s$.

On entend par respecter un gabarit fréquenciel, le fait d'interdire certaines fréquences ou certains intervalles de fréquences au couple électromagnétique $T_{em}$.

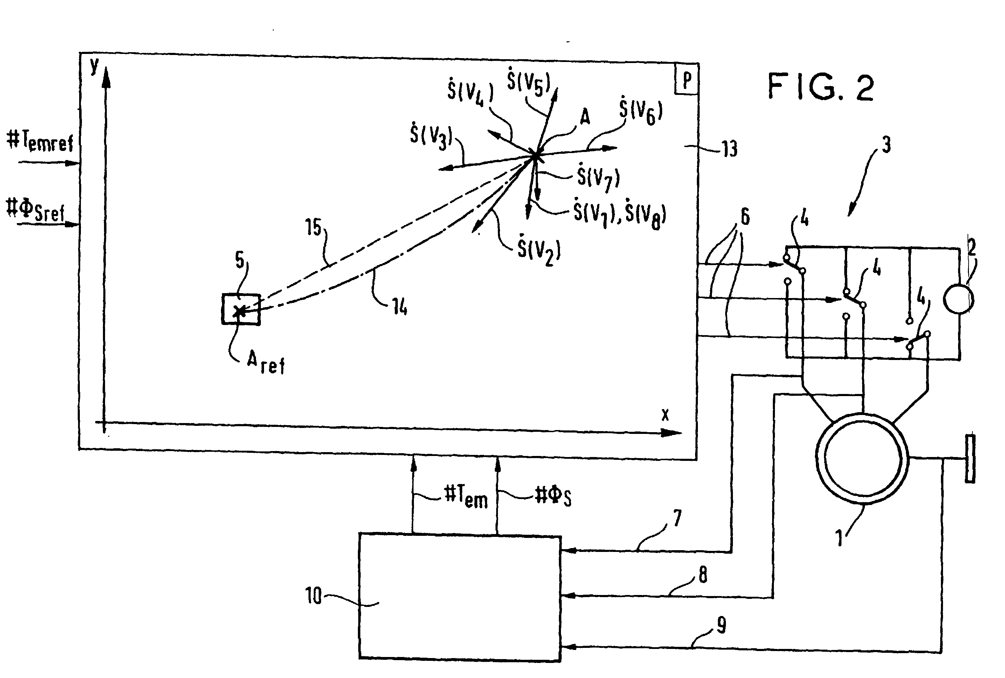

Dans une forme de réalisation du procédé représentée sur les figures 2 à 3E, pour déterminer l'état optimal, on construit, dans le calculateur 13, un plan de sortie P dont l'un y des axes est représentatif du couple électromagnétique et l'autre x axe est représentatif du flux stator, on définit un point $A_{ref}$ représentant les consignes de couple et de flux statorique dans le dit plan et un point A représentant la configuration instantanée de la machine, on définit autour du point $A_{ref}$ un élément de plan 5 $\pm\Delta$ x, $\pm\Delta$ y à l'intérieur duquel on est en régime établi, et à l'extérieur duquel on est en régime transitoire. De ce fait le plan P est divisé en deux parties, chacune représentant un des régimes.

En régime transitoire, il est nécessaire de se rapprocher au plus vite des valeurs de consignes de manière à diminuer les temps de réponse. Pour cela, dans le plan P, le procédé choisit parmi l'ensemble des états $V_i$ (i$\in\{1,..,m^n\}$) possibles du vecteur tension de phase stator $V_s$ celui qui propose la plus grande vitesse de variation du point A dans une direction proche de la direction idéale (A-$A_{ref}$) de rapprochement.

A cet effet, dans une étape d'initialisation, on introduit dans le calculateur 13 un modèle d'état de la machine tournante dans lequel le vecteur de sortie S est un vecteur du plan de sortie P et le vecteur de commande C est le vecteur de tension de phase $V_s$; et

en régime transitoire, à chaque échantillonnage,

le calculateur 13 calcule le vecteur (A-$A_{ref}$),

le calculateur 13 calcule la dérivée directionnelle $\dot{S}$ du vecteur de sortie S pour chacun des états $V_i$ possibles du vecteur tension de phase $V_s$,

le calculateur 13 calcule le produit scalaire de chacune des dérivées directionnelles $\dot{S}(V_i)$ du vecteur de sortie S avec le vecteur (A-$A_{ref}$),

le calculateur choisit comme vecteur de commande C l'état $V_i$ du vecteur tension de phase $V_s$ associé au plus grand des produits scalaires calculés.

La figure 2 représente le fonctionnement du procédé en régime transitoire. La ligne 15 en pointillée représente le chemin idéal pour que A rejoigne $A_{ref}$ au plus vite. A chaque période d'échantillonnage, le vecteur (A-$A_{ref}$) est recalculé ainsi que l'état optimal. Il peut en résulter, par exemple, une trajectoire telle que représentée par la courbe 14.

La dynamique de réponse à un différentiel de couple négatif est meilleure que dans l'art antérieur.

Pour des valeurs élevées de n et/ou m (nombreux états possibles) cela à pour autre avantage que lorsque l'un des SPmLL est accidentellement bloqué dans une position qui n'est pas optimale pour une configuration donnée, le procédé continuera à choisir l'état le meilleur possible parmi les états possibles restants pour se rapprocher des consignes. Les performances dynamiques du contrôle en sont affecté, mais les risques de divergences où de pic de couple sont supprimés.

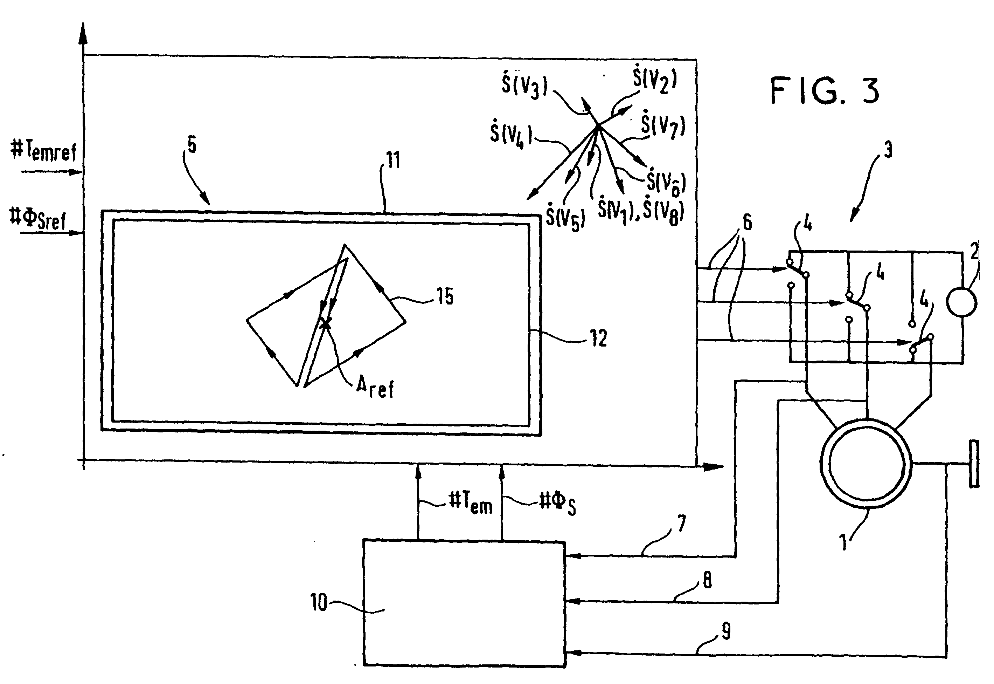

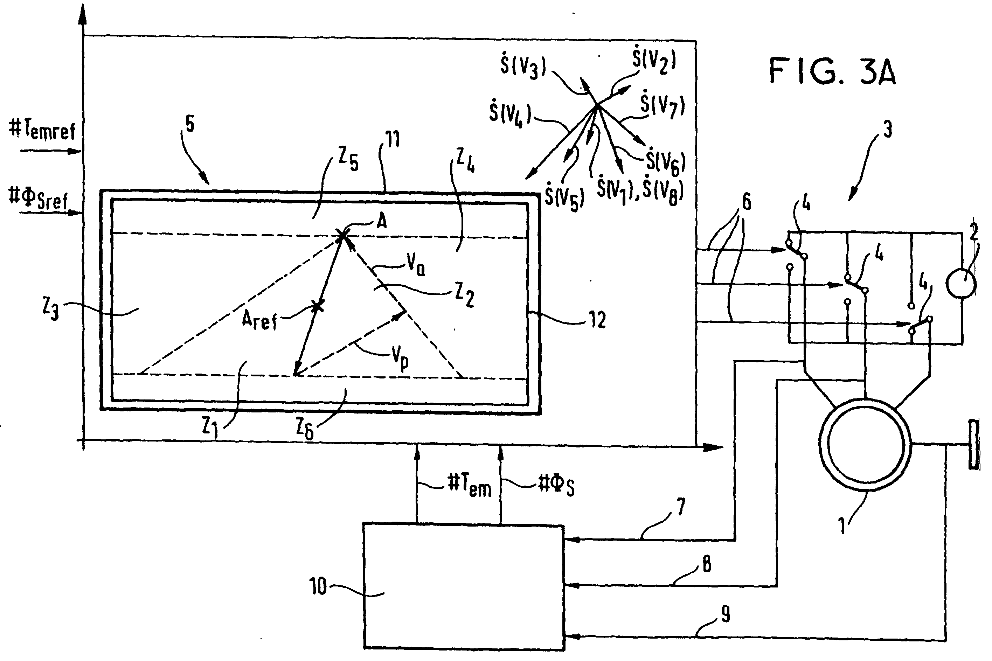

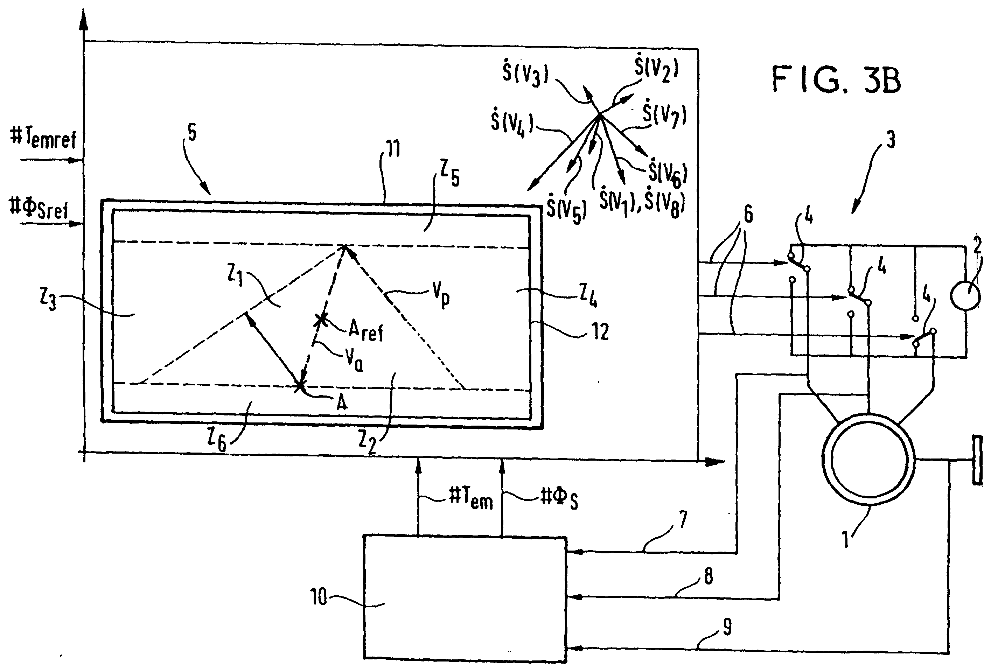

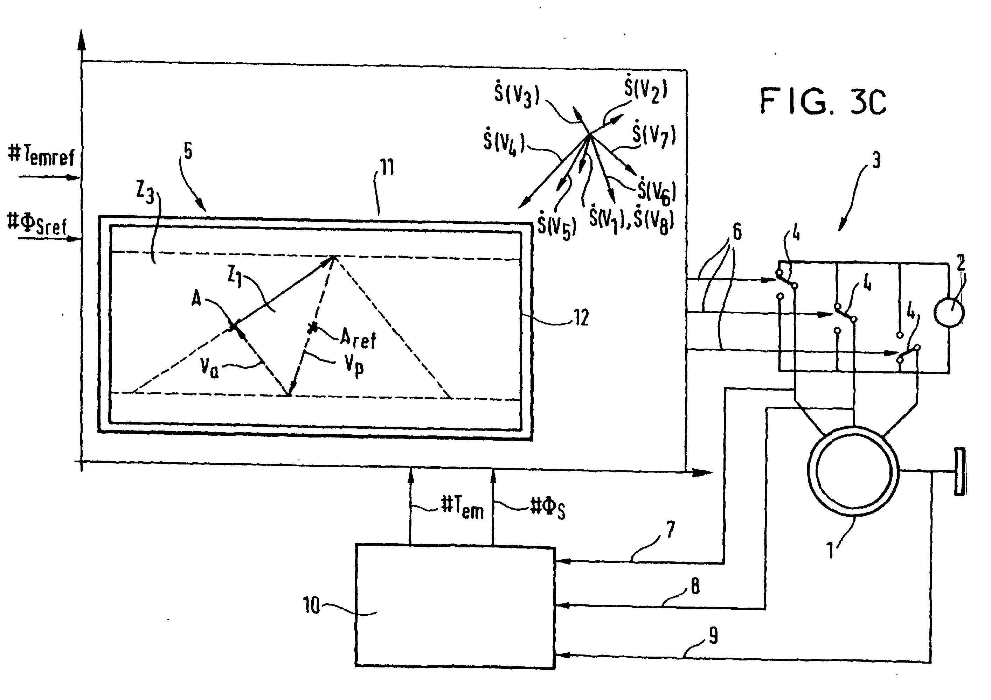

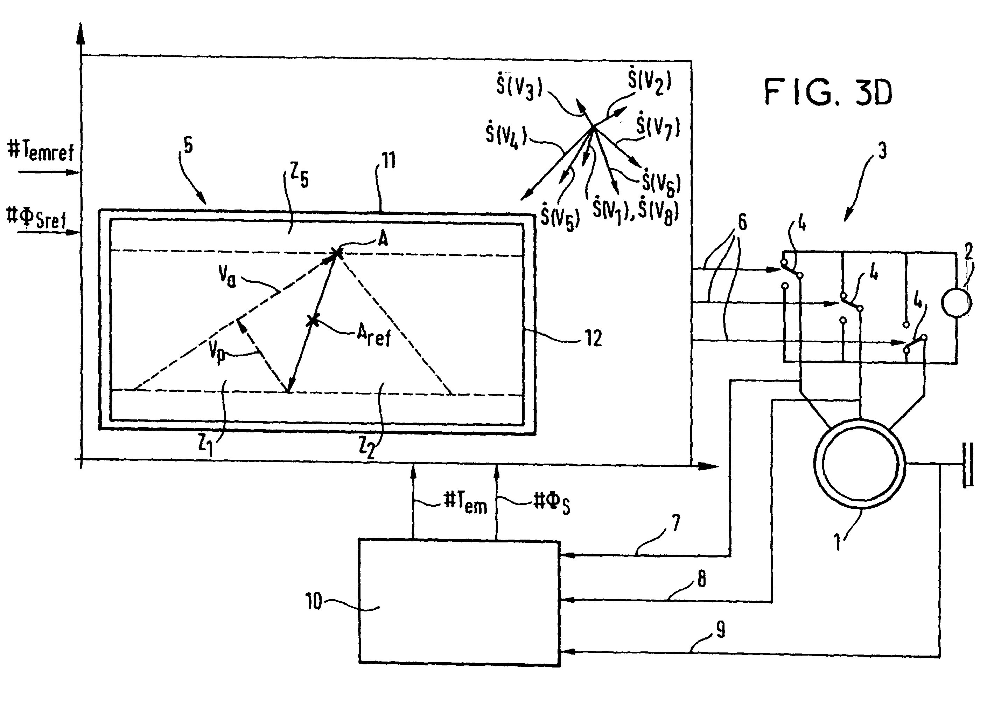

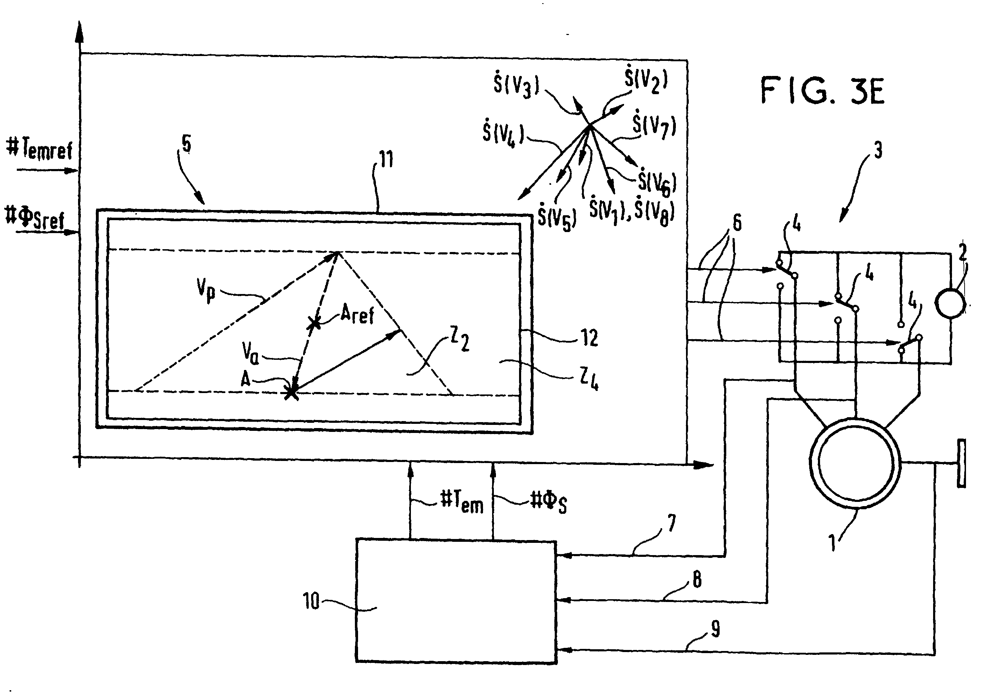

En outre ( Cf fig 3 à 3E), toujours durant l'étape d'initialisation, on construit, dans le calculateur 13 un chemin 15 cyclique de circulation du point A autour du point $A_{ref}$ dans l'élément de plan 5,

on rentre dans le calculateur une fréquence moyenne de découpage pour l'onduleur 3,

le calculateur divise l'élément de plan 5 en zones $Z_i$ de commutation adaptées au chemin cyclique 15,

le calculateur construit une table de commutation dans laquelle pour chaque zone $Z_i$ il fait correspondre l'état $V_f$ optimal futur du vecteur tension de phase stator $V_s$ en fonction des états actuel $V_a$ et passé $V_p$ du vecteur tension de phase stator $V_s$ pour suivre le chemin cyclique 15 de circulation dans ladite zone $Z_i$; et en ce que,

en régime établi, et à chaque échantillonnage,

le calculateur 13 calcule les tailles des zones $Z_i$ de commutation en fonction de la configuration instantanée de la machine, de manière à respecter la fréquence moyenne de découpage choisie

le calculateur choisit comme vecteur de commande C l'état $V_f$ optimal futur du vecteur tension de phase stator $V_s$, à partir de la table de commutation, en fonction de la zone $Z_i$ où se trouve le point A, et des états actuel $V_a$ et passé $V_p$ du vecteur tension de phase stator $V_s$. L'état passé $V_p$ du vecteur tension de phase stator $V_s$ doit être compris comme étant l'état de la commutation précédente.

Les figures 3 à 3E ainsi que la table de commutation ci dessous représentent un exemple de réalisation du procédé en régime établi

| ZONE $Z_i$ | $V_p$ | $V_a$ | $V_f$ |
|---|---|---|---|
| $Z_1$ | $V_2$ | $V_3$ | $V_1$ |
| | $\forall V_i$ | $V_2$ | $V_2$ |
| | $\forall V_i \neq V_2$ | $V_3$ | $V_3$ |
| | $\forall V_i$ | $V_i=\{V_1,V_5,V_7\}$ | $V_1$ |
| | $\forall V_i$ | $V_i=\{V_4,V_6,V_8\}$ | $V_8$ |
| $Z_2$ | $V_3$ | $V_2$ | $V_8$ |
| | $\forall V_i \neq V_3$ | $V_2$ | $V_2$ |
| | $\forall V_i$ | $V_3$ | $V_3$ |
| | $\forall V_i$ | $V_i=\{V_1,V_5,V_7\}$ | $V_1$ |
| | $\forall V_i$ | $V_i=\{V_4,V_6,V_8\}$ | $V_8$ |
| $Z_3$ | $V_2$ | $V_3$ | $V_1$ |
| | $\forall V_i$ | $V_2$ | $V_2$ |
| | $\forall V_i \neq V_2$ | $V_3$ | $V_2$ |
| | $\forall V_i$ | $V_i=\{V_1,V_5,V_7\}$ | $V_8$ |
| | $\forall V_i$ | $V_i=\{V_4,V_6,V_8\}$ | $V_1$ |

(suite)

| ZONE $Z_i$ | $V_p$ | $V_a$ | $V_f$ |
|---|---|---|---|
| $Z_4$ | $V_3$ | $V_2$ | $V_8$ |
| | $\forall V_i \neq V_3$ | $V_2$ | $V_3$ |
| | $\forall V_i$ | $V_3$ | $V_3$ |
| | $\forall V_i$ | $V_i=\{V_1,V_5,V_7\}$ | $V_1$ |
| | $\forall V_i$ | $V_i=\{V_4,V_6,V_8\}$ | $V_8$ |
| $Z_5$ | $\forall V_i$ | $V_i=\{V_1, V_3, V_5, V_7\}$ | $V_1$ |
| | $\forall V_1$ | $V_i=\{V_2, V_4, V_6, V_8\}$ | $V_8$ |
| $Z_6$ | $\forall V_i$ | $V_i=\{V_1, V_3, V_5, V_7\}$ | $V_1$ |
| | $\forall V_i$ | $V_i=\{V_2, V_4, V_6, V_8\}$ | $V_8$ |
| Table de commutation en régime établi | | | |

la figure 3 montre le cycle 15 choisi. Les figures 3A à 3E ainsi que la table ci-dessus montre un exemple de circulation du point A suivant le cycle 15 choisi.

On comprend aisément que le positionnement et le dimensionnement des zones $Z_i$ ont une influence sur la fréquence moyenne de découpage de l'onduleur et vice versa. Ainsi, la fréquence moyenne de découpage de l'onduleur est prise en considération lors de la construction des zones $Z_i$.

Le contrôle de la fréquence moyenne de découpage de l'onduleur est un avantage permettant de limiter sensiblement les risques de détériorations des SPmLL et de prolonger leur durée de vie.

Sur la figure 3A, le point A est soit en zone $Z_2$ soit en zone $Z_4$, l'état actuel est $V_3$, l'état passé est $V_2$. Le point A peut, dans le futur, passer en zone $Z_5$, $Z_1$, ou $Z_3$. A travers la table de commutation, on constate que tant que A reste dans $Z_2$ ou $Z_4$, l'état futur restera l'état actuel $V_3$, si le point A passe dans l'une des zones $Z_5$, $Z_1$, ou $Z_3$, l'état futur est $V_1$.

Les figures 3B à 3E peuvent être expliquées de la même façon en utilisant la table de commutation.

Bien que basé sur un système à table de commutation le procédé, en régime établi, est relativement sûr. En effet, le point A peut être amené à diverger et à sortir de l'élément de plan. Le système balance alors vers le régime transitoire où l'état Vi disponible optimal est choisi selon le procédé en régime transitoire.

Avantageusement, l'élément de plan 5 comprend une bande d'hystérésis ayant une borne intérieure 12 et une borne extérieure 11 telles que :

le basculement du régime transitoire vers le régime établi se fait lorsque le point A a franchi la borne intérieure 12 de la bande d'hystérésis; et

le basculement du régime établi vers le régime transitoire se fait lorsque le point A a franchi la borne extérieure 11 de la bande d'hystérésis.

Un modèle d'état de la machine tournante est, par exemple, un modèle non linéaire, affine en la commande du type :

$$\dot{E} = f(E) + g(E)V_s$$

$$S = h(E)$$

où E est le vecteur d'état, f, g, h des fonctions analytiques du vecteur d'état E;
la dérivée directionnelle S du vecteur de sortie S est :

$$\dot{S}(V_s) = \frac{\partial h(E)}{\partial E} \dot{E} = \frac{\partial h(E)}{\partial E}f(E) + \frac{\partial h(E)}{\partial E} g(E) V_s$$

en fonction du modèle d'état.

Dans un mode de réalisation, l'axe des y représente directement le couple électromagnétique, et l'axe des x représente le carré du flux statorique. Avantageusement les points du plan P ont pour coordonnées:

$$(\lambda\phi_S{}^2/\phi_o{}^2, (\lambda-1)T_{em}/T_o)$$

où $\lambda$ est un coefficient pondérateur dont la valeur est fixé par l'utilisateur de la machine tournante. Ce coefficient pondérateur permet de donner un poids plus ou moins important à l'une des sorties par rapport à l'autre.

L'invention concerne aussi un système d'asservissement mettant en oeuvre le procédé ci-dessus décrit.

L'invention concerne enfin une machine tournante comprenant un tel système d'asservissement.

Bien entendu, l'invention n'est pas limitée au mode de réalisation décrit et représenté, mais elle est susceptible de nombreuses variantes accessibles à l'homme du métier sans que l'on s'écarte de l'invention. En particulier, on pourra, sans sortir du cadre de l'invention, remplacer le cycle proposé par tout autre cycle induisant ses propres zones de commutation et sa propre table de commutation. En outre, les trois SP2LL peuvent être remplacé par n SPmLL sans que l'on sorte du cadre de l'invention.

## Revendications

1. Procédé de régulation d'une machine tournante (1) à n Phases alimentée en courant alternatif par l'intermédiaire d'un onduleur de tension (3), comprenant n SPmLL (4) définissant $m^n$ états $V_i$ ($i \in \{1,..,m^n\}$) du vecteur tension de phase stator $V_s$, ladite machine étant asservie en couple électromagnétique $T_{em}$ et en flux statorique $\phi_s$ à un couple électromagnétique $T_{emref}$ et à un flux statorique $\phi_{sref}$ par un système d'asservissement comprenant un ensemble de capteurs dont les valeurs captées (7, 8, 9,) sont transmises à un observateur (10), les sorties de l'observateur (10) étant injectées dans un calculateur (13), ledit calculateur (13) restituant en sortie des signaux de commandes (6) destinés à commander les SPmLL (4) de l'onduleur de tension (3),

   tel que, dans une stratégie de contrôle pour un régime transitoire dans lequel le couple électromagnétique $T_{em}$ et/ou le flux statorique $\phi_s$ sont éloignés respectivement du couple électromagnétique $T_{emref}$ et/ou du flux statorique $\phi_{sref}$ de consigne, le calculateur (13) choisit parmi tous les états $V_i$ possibles du vecteur tension de phase stator $V_s$ celui qui est optimal pour amener le couple $T_{em}$ et le flux statorique $\phi_s$ vers le couple $T_{emref}$ et le flux statorique $\phi_{sref}$ de consigne et restitue des signaux de commandes (6) pour commander les SPmLL (4) selon l'état choisi du vecteur tension de phase $V_s$,

   et **caractérisé en ce que** dans une étape d'initialisation du procédé on construit dans le calculateur (13) un plan virtuel de sortie P dont l'un (y) des axes est représentatif du couple électromagnétique et l'autre axe (x) est représentatif du flux stator, les consignes de couple et de flux statorique étant représentées par un point $A_{ref}$ et le couple et le flux statorique instantanés par un point A, un élément de plan (5) ($\pm\Delta$ x, $\pm\Delta$ y) étant défini autour du point $A_{ref}$, et le calculateur (13) utilise la stratégie de contrôle en régime établi lorsque le point A est à l'intérieur de l'élément de plan (5) et la stratégie de contrôle en régime transitoire

   lorsque le point A est à l'extérieur de l'élément de plan (5), cette stratégie de contrôle en régime transitoire comprenant les étapes suivantes :

   - on introduit dans le calculateur (13) un modèle d'état de la machine tournante dans lequel le vecteur de sortie S est un vecteur du plan de sortie P et le vecteur de commande C est le vecteur de tension de phase $V_s$; et
   - en régime transitoire, à chaque échantillonnage, le calculateur (13) calcule le vecteur (A- $A_{ref}$), le calculateur (13) calcule la dérivée directionnelle $\dot{S}$ du vecteur de S pour chacun des états $V_i$ possibles du vecteur tension de phase $V_s$,
   - le calculateur (13) calcule le produit scalaire de chacune des dérivées directionnelles $\dot{S}$ ($V_i$) du vecteur de sortie S avec le vecteur (A- $A_{ref}$),
   - le calculateur choisit comme vecteur de commande C l'état $V_i$ du vecteur tension de phase $V_s$ associé au plus grand des produits scalaires calculés.

2. Procédé de régulation d'une machine tournante selon la revendication 1 tel que, la stratégie de contrôle pour un régime établi dans lequel le couple $T_{em}$ et le flux statorique $\phi_s$ sont compris respectivement dans un intervalle $\pm\Delta T_{em}$ autour de $T_{emref}$ et dans un intervalle $\pm\Delta$ $\phi_s$ autour de $f_{sref}$.

   le calculateur (13) choisit parmi tous les états $V_i$ possibles du vecteur tension de phase stator $V_s$ celui qui, pour une fréquence moyenne de découpage de l'onduleur (3) préétablie, est optimal

   pour minimiser les amplitudes des oscillations du couple $T_{em}$ et du flux statorique $\phi_s$ autour respectivement du couple $T_{emref}$ et du flux statorique $\phi_{sref}$ de consigne, et/ou pour respecter un gabarit fréquentiel pour le couple

$T_{em}$ ;

le calculateur (13) restitue des signaux de commandes (6) pour commander les SPmLL (4) selon l'état choisi du vecteur tension de phase $V_s$.

**3.** Procédé selon l'une des revendications 1 ou 2 tel que, en outre, dans l'étape d'initialisation du procédé
on construit, dans le calculateur (13) un chemin (15) cyclique de circulation du point A autour du point $A_{ref}$ dans l'élément de plan (5).
le calculateur divise l'élément de plan (5) en zones $Z_i$ de commutation adaptées au chemin cyclique (15),
on rentre dans le calculateur une fréquence moyenne de découpage pour l'onduleur (3),
le calculateur construit une table de commutation dans laquelle pour chaque zone $Z_i$ il fait correspondre l'état $V_f$ optimal futur du vestion tension de phase stator $V_s$ en fonction des états actuels $V_a$ et passé $V_p$ du vecteur tension de phase stator $V_s$ pour suivre le chemin cyclique (15) de circulation dans ladite zone $Z_i$ ; et en ce que
en régime établi, et à chaque échantillonnage,
le calculateur (13) calcule tes tailles des zones $Z_i$ de commutation en fonction de la configuration instantanée de la machine, de manière à respecter la fréquence moyenne de découpage choisie
le calculateur choisit comme vecteur de commande C l'état $V_f$ optimal futur du vecteur tension de phase stator $V_s$ à partir de la table de commutation, en fonction de la zone $Z_i$ où se trouve le point A, et des états actuels $V_a$ et passé $V_p$ du vecteur tension de phase stator $V_s$.

**4.** Procédé selon l'une des revendications 1 à 3 tel que le modèle de la machine tournante est un modèle non linéaire, affine en la commande du type :

$$\dot{E} = f(E) + G(E)V_s$$

$$S = h(E)$$

où E est le vecteur d'état, f, g, h des fonctions analytiques du vecteur d'Etat E la dérivée directionnelle $\dot{S}$ du vecteur de sortie S est :

$$\dot{S}(V_s) = \frac{\partial h(E)}{\partial E} \dot{E} = \frac{\partial h(E)}{\partial E} f(E) + \frac{\partial h(E)}{\partial E} g(E) V_s$$

en fonction du modèle d'état.

**5.** Procédé selon l'une des revendications 1 à 4 tel que l'élément de plan (5) comprend une bande d'hystérésis ayant une borne intérieure (12) et une borne extérieure (11) telles que :

le basculement de la stratégie de contrôle en régime transitoire vers la stratégie de contrôle en régime établi se fait lorsque le point A a franchi la borne intérieure (12) de la bande d'hystérésis ; et
le basculement de la stratégie de contrôle en régime établi vers la stratégie de contrôle en régime transitoire se fait lorsque le point A a franchi la borne extérieure (11) de la bande d'hystérésis.

**6.** Dispositif d'asservissement d'une machine tournante (1) à n Phases alimentée en courant alternatif par l'intermédiaire d'un onduleur de tension (3), comprenant n SPmLL (4) définissant $m^n$ états $V_i$ ($i \in \{1,..,m^n\}$) du vecteur tension de phase stator $V_s$, ladite machine pouvant être asservie en couple électromagnétique $T_{em}$ et un flux statorique $\phi_s$ à un couple électromagnétique $T_{emref}$ et à un flux statorique $S_{Sref}$ par ledit dispositif d'asservissement comprenant un ensemble de capteurs dont les valeurs captées (7, 8, 9) peuvent être transmises à un observateur (10), les sorties de l'observateur (10) pouvant être injectées dans un calculateur (13), ledit calculateur (13) pouvant restituer en sortie des signaux de commandes (6) destinés à commander les SPmLL (4) de l'onduleur de tension (3),
**caractérisé en ce que** ledit dispositif met en oeuvre le procédé selon l'une quelconque des revendications 1 à 5.

**7.** Application du dispositif selon la revendication 6 à une machine tournante à n Phases alimentée en courant alternatif par l'intermédiaire d'un onduleur de tension (3), comprenant n SPmLL (4) définissant $m^n$ états $V_i$ ($i \in \{1,.., m^n\}$) du vecteur tension de phase stator $V_s$, ladite machine pouvant être asservie en couple électromagnétique $T_{em}$ et en flux statorique $\phi_s$ à un couple électromagnétique $T_{emref}$ et à un flux statorique $\phi_{sref}$ par un dispositif d'asservissement comprenant un ensemble de capteurs dont les valeurs captées ( 7, 8, 9) peuvent être transmises à un observateur (10), les sorties de l'observateur (10) pouvant être injectées dans un calculateur (13), ledit calculateur (13) pouvant restituer en sortie des signaux de commandes (6) destinés à commander les SPmLL (4) de l'onduleur de tension (3), ledit dispositif d'asservissement étant selon la revendication 6.

**Claims**

1. A method of regulating a rotating machine (1) with $\underline{n}$ phases fed with alternating current by a voltage inverter (3), including $\underline{n}$ SPmLL (4) defining $m^n$ states $V_i$ ($i \in \{1,..,m^n\}$) of the stator phase voltage vector $V_s$, the electromagnetic torque $T_{em}$ and stator flux $\phi_S$ of said machine being slaved to an electromagnetic torque $T_{emref}$ and a stator flux $\phi_{Sref}$ by a servocontrol system including a set of sensors the values (7, 8, 9) sensed by which are transmitted to an observer (10), the outputs of the observer (10) being fed into a computer (13), said computer (13) providing at its output command signals (6) to command the SPmLL of the voltage inverter (3);

   wherein, in accordance with a control strategy for transient conditions in which the electromagnetic torque $T_{em}$ and/or the stator flux $\phi_S$ are respectively far from the commanded electromagnetic torque $T_{emref}$ and/or stator flux $\phi_{Sref}$, the computer (13) chooses from all possible states $V_i$ of the stator phase voltage vector $V_s$ that which is optimal for causing the torque $T_{em}$ and the stator flux $\phi_S$ to converge towards the commanded torque $T_{emref}$ and stator flux $\phi_{Sref}$ and produces command signals (6) for commanding the SPmLL (4) in accordance with the chosen state of the phase voltage vector $V_s$, **characterized in that**, in an initialization step of the method, a virtual output plane P is constructed in the computer (13) of which one axis $\underline{y}$ is representative of the electromagnetic torque and the other axis $\underline{x}$ is representative of the stator flux, the commanded torque and stator flux being represented by a point $A_{ref}$ and the instantaneous torque and stator flux by a point A, a plane element (5) ($\pm\Delta x$, $\pm\Delta y$) being defined around the point $A_{ref}$, and the computer (13) uses the steady state conditions control strategy if the point A is inside the plane element (5) and the transient conditions control strategy if the point A is outside the plane element (5) this transient conditions control strategy comprising the following steps:

   - a state model of the rotating machine is fed into the computer (13) in which the output vector S is a vector of the output plane P and the command vector C is the phase voltage vector $V_s$; and
   - under transient conditions, on each sampling, the computer (13) calculates the vector $(A-A_{ref})$, the computer (13) calculates the directional derivative S of the vector S for each of the possible states $V_i$ of the phase voltage vector $V_s$,
   - the computer (13) calculates the scalar product of each of the directional derivatives $\dot{S}(V_i)$ of the output vector S by the vector $(A-A_{ref})$,
   - the computer (13) chooses as the command vector C the state $V_i$ of the phase voltage vector $V_s$ associated with the largest of the calculated scalar products.

2. A method of regulating a rotating machine according to claim 1 wherein, in accordance with a control strategy for steady state conditions in which the torque $T_{em}$ and the stator flux $\phi_S$ are respectively in a range $\pm\Delta T_{em}$ about $T_{emref}$ and in a range $\pm\Delta\phi_S$ about $\phi_{Sref}$, the computer (13) chooses from all possible states $V_i$ of the stator phase voltage vector $V_s$ that which is optimal for a predefined average switching frequency of the inverter (3), to minimize the amplitudes of the oscillations of the torque $T_{em}$ and the stator flux $\phi_S$ about the commanded torque $T_{emref}$ and stator flux $\phi_{Sref}$, respectively, and/or to conform to a frequency template for the torque Tem; the computer (13) produces command signals (6) for commanding the SPmLL (4) according to the chosen state of the phase voltage vector $V_s$.

3. A method according to claim 1 or claim 2 wherein, additionally, in the initialization step of the method:

   a cyclic path (15) is constructed in the computer (13) along which the point A circulates about the point $A_{ref}$ in the plane element (5), the computer divides the plane element (5) into commutation zones $Z_i$ matched to the cyclic path (15), an average switching frequency for the inverter (3) is fed into the computer, the computer constructs a commutation table in which for each zone $Z_i$ it establishes the correspondence between the future optimal state $V_f$ of the stator phase voltage vector $V_s$ as a function of the current state $V_a$ and the past state $V_p$ of the stator phase voltage vector $V_s$ to track the cyclic circulation path (15) in said zone $Z_i$; and in that,

under steady state conditions, and on each sampling,
the computer (13) calculates the sizes of the commutation zones $Z_i$ as a function of the instantaneous configuration of the machine, in such a manner as to conform to the average switching frequency chosen,
the computer chooses as the command vector C the future optimal state $V_f$ of the stator phase voltage vector $V_s$, on the basis of the commutation table, according to the zone $Z_i$ in which the point A is located and the current state $V_a$ and the past state $V_p$ of the stator phase voltage vector $V_s$.

4. A method according to any of claims 1 to 3 wherein the model of the rotating machine is a non-linear affine control model of the type:

$$\dot{E} = f(E)+G[sic](E)V_s$$

$$S = h(E)$$

where E is the state vector, and $\underline{f}$, $\underline{g}$, $\underline{h}$ are analytic functions of the state vector E;
the directional derivative $\dot{S}$ of the output vector S is dependent on the state model:

$$\dot{S}(V_s)=\frac{\partial h(E)}{\partial E}\dot{E}=\frac{\partial h(E)}{\partial E}f(E)+\frac{\partial h(E)}{\partial E}g(E)V_s$$

5. A method according to any of claims 1 to 3 wherein the plane element (5) includes a hysteresis band having an inner limit (12) and an outer limit (11) such that:

the changeover from the transient conditions control strategy to the steady state conditions control strategy occurs if the point A has crossed the inner limit (12) of the hysteresis band; and
the changeover from the steady state conditions control strategy to the transient conditions control strategy occurs if the point A has crossed the outer limit (11) of the hysteresis band.

6. A servocontrol system for a rotating machine (1) with $\underline{n}$ phases fed with alternating current by a voltage inverter (3), comprising $\underline{n}$ SPmLL (4) defining $m^n$ states $V_i$ ($i \in \{1,..,m^n\}$) of the stator phase voltage vector $V_s$, the electromagnetic torque $T_{em}$ and stator flux $\phi_S$ of said machine being slaved to an electromagnetic torque $T_{emref}$ and a stator flux $\phi_{Sref}$ by said servocontrol system including a set of sensors the sensed values (7, 8, 9) of which are transmitted to an observer (10), the outputs of the observer (10) being fed into a computer (13), said computer (13) producing at its output command signals (6) for commanding the SPmLL (4) of the voltage inverter (3), **characterized in that** said system uses the method according to any of claims 1 to 5.

7. Application of the system according to claim 6 to a rotating machine with $\underline{n}$ phases fed with alternating current by a voltage inverter (3), including $\underline{n}$ SPmLL (4) defining $m^n$ states $V_i$ ($i \in \{1,..,m^n\}$) of the stator phase voltage vector $V_s$, the electromagnetic torque $T_{em}$ and stator flux $\phi_S$ of said machine being slaved to an electromagnetic torque $T_{emref}$ and a stator flux $\phi_{Sref}$ by a servocontrol system including a set of sensors the sensed values (7, 8, 9) of which are transmitted to an observer (10), the outputs of the observer (10) being fed into a computer (13), said computer (13) producing at its output command signals (6) for commanding the SPmLL (4) of the voltage inverter (3), the servocontrol system being according to claim 6.

**Patentansprüche**

1. Verfahren zur Regelung einer n-phasigen Drehmaschine (1), welche mit Wechselstrom mittels eines Spannungswechselrichters (3) versorgt wird, welcher n SPmLL (4) umfasst, die $m^n$ Zustände $V_i$ ($I \in \{1,...,m^n\}$) des Statorphasenspannungsvektors $V_S$ definieren, welche Maschine in dem elektromagnetischen Moment $T_{em}$ und dem Statorfluss $\Theta_s$ mit einem elektromagnetischen Moment $T_{emref}$ und mit einem Statorfluss $\Theta_{Sref}$ durch ein Regelsystem geregelt wird, welches einen Satz von Aufnehmern umfasst, deren erfassten Werte (7, 8, 9) an einen Beobachter (10) übertragen werden, die Ausgänge des Beobachters (10) in einen Rechner (13) eingegeben werden, welcher Rechner (13) am Ausgang Steuersignale (6) abgibt, welche bestimmt sind die SPmLL (4) des Spannungswechselrichters (3) zu steuern,
wobei in einer Regelungsstrategie für einen Übergangsbereich, in welchem sich das elektromagnetische Moment

$T_{em}$ und/oder der Statorfluss $\Theta_s$, jeweils vom elektromagnetischen Sollmoment $T_{emref}$ und/oder Sollstatorfluss $\Theta_{Sref}$ entfernen, der Rechner (13) unter den möglichen Zuständen $V_i$ des Phasenspannungsvektors $V_s$ denjenigen auswählt, der optimal ist um das Moment $T_{em}$ und den Statorfluss $\Theta_S$ zum Sollmoment $T_{emref}$ and Sollstatorfluss $\Theta_{Sref}$ zu bringen, und gibt Regelsignale (6) ab, um die SPmLL (4) entsprechend dem gewählten Zustand des Phasenspannungsvektors $V_s$ zu regeln,

und **dadurch gekennzeichnet ist, dass** in einem Initialisierungsschritt des Verfahrens in dem Rechner (13) eine virtuelle Ausgangsfläche P konstruiert wird, in welcher eine (y) der Achsen für das elektromagnetische Moment und die andere Achse (x) für den Statorfluss steht. die Sollwerte des Moments und des Statorflusses durch einen Punkt $A_{ref}$ und das momentane Moment und der momentane Statorfluss durch einen Punkt A dargestellt werden, ein Flächenelement (5) ($\pm\Delta x$, $\pm\Delta y$) um den Punkt $A_{ref}$ definiert wird,

und der Rechner (13) die Strategie der Regelung im Bestimmungsbereich verwendet. wenn sich der Punkt A innerhalb des Flächenelements (5) befindet, und die Strategie der Regelung im Übergangsbereich verwendet, wenn sich der Punkt A außerhalb des Flächenelements (5) befindet, wobei die Strategie der Regelung im Übergangsbereich die folgenden Schritte umfasst:

- man bringt in den Rechner (13) ein Zustandsmodell der Drehmaschine ein, in welchem der Ausgangsvektor S ein Vektor der Ausgangsfläche P und der Regelungsvektor C der Phasenspannungsvektor $V_s$ ist; und
- im Übergangsbereich berechnet der Rechner (13) bei jeder Stichprobe den Vektor (A-$A_{ref}$), der Rechner (13) berechnet die Richtungsableitung $\dot{S}$ des Vektors von S für jeden der möglichen Zustände $V_i$ des Phasenspannungsvektors $V_s$,
- der Rechner (13) berechnet das Skalarprodukt jeder der Richtungsableitungen $\dot{S}(V_i)$ des Ausgangsvektors S mit dem Vektor (A-$A_{ref}$),
- der Rechner wählt als Regelungsvektor C den Zustand $V_i$ des Phasenspannungsvektors $V_s$, der am besten zu den berechneten Skalarprodukten passt.

2. Verfahren zur Regelung einer Drehmaschine nach Anspruch 1, wobei bei einer Strategie der Regelung für einen Bestimmungsbereich, in welchem der Moment $T_{em}$ und der Statorfluss $\Theta_S$ jeweils in einem Intervall $\pm\Delta T_{em}$ um $T_{emref}$ und in einem Intervall $\pm\Delta\Theta_S$ um $\Theta_{Sref}$ enthalten sind,

der Rechner (13) aus den möglichen Zuständen $V_i$ des Statorphasenspannungsvektors $V_S$ denjenigen auswählt, der für eine voreingestellte mittlere Teilungsfrequenz des Wechselrichters (3) optimal ist um die jeweiligen Schwingungsamplituden des Moments $T_{em}$ und des Statorflusses $\Theta_S$ um das Sollmoment $T_{emref}$ und den Sollstatorfluss $\Theta_{Sref}$ zu minimalisieren, und/oder um ein Frequenzmaß für das Moment $T_{em}$ einzuhalten,

der Rechner (13) Steuersignale (6) abgibt um die SPmLL (4) entsprechend dem gewählten Zustand des Statorphasenspannungsvektors $V_S$ zu regeln.

3. Verfahren nach einem der Ansprüche 1 oder 2, bei welchem ferner in dem Initialisierungsschritt des Verfahrens in dem Rechner (13) ein zyklischer Weg (15) für den Umlauf des Punktes A um den Punkt $A_{ref}$ in dem Flächenelement (5) konstruiert wird,

der Rechner das Flächenelement (5) in Vertauschungszonen $Z_i$ einteilt, welche dem zyklischen Weg (15) angepasst sind,

in den Rechner eine mittlere Teilungsfrequenz für den Wechselrichter (3) eingegeben wind,

der Rechner eine Vertauschungstabelle konstruiert, in welcher für jede Zone $Z_i$ der optimale zukünftige Zustand $V_f$ des Statorphasenspannungsvektors $V_s$ einer Funktion der aktuellen Zustände $V_a$ und der vergangenen Zustände $V_p$ des Statorphasenspannungsvektor $V_s$ entspricht um dem zyklischen Umlaufweg (15) in der Zone $Z_i$ zu folgen, und wobei

im Bestimmungsbereich und bei jeder Stichprobe der Rechner (13) die Größen der Vertauschungszonen $Z_i$ als Funktion der Momentankonfiguration der Maschine berechnet, derart, dass die mittlere Frequenz der gewählten Teilung berücksichtigt wird,

der Rechner als Regelungsvektor C den zukünftigen optimalen Zustand $V_f$ des Statorphasenspannungsvektors $V_s$ anhand der Vertauschungstabelle als Funktion der Zone $Z_i$, worin sich der Punkt A befindet, und der aktuellen Zustände $V_a$ und der vergangenen Zustände $V_p$ des Statorphasenspannungsvektors $V_s$ wählt.

4. Verfahren nach einem der Ansprüche 1 bis 3, bei welchem das Modell der Drehmaschine ein nichtlineares Modell, genauer eine Regelung vom Typ:

$$\dot{E} = f(E) + g(E)V_s$$

$$S = h(E)$$

worin E der Zustandsvektor, f, g, h analytische Funktionen des Zustandsvektors E sind; die Richtungsableitung $\dot{S}$ des Ausgangsvektors S ist:

$$\dot{S}(V_s) = \frac{\partial h(E)}{\partial E}\ \dot{E} = \frac{\partial h(E)}{\partial E}f(E) + \frac{\partial h(E)}{\partial(E)}g(E)V_s$$

als Funktion des Zustandsmodells.

5. Verfahren nach einem der Ansprüche 1 bis 4, bei welchem das Flächenelement (5) ein Hystereseband mit einer unteren Grenze (12) und einer oberen Grenze (11) umfasst, derart, dass:

   das Wechseln der Regelungsstrategie im Übergangsbereich zur Regelungsstrategie im Bestimmungsbereich dann erfolgt, wenn der Punkt A die untere Grenze (12) des Hysteresebands überschritten hat; und
   das Wechseln der Regelungsstrategie im Bestimmungsbereich zur Regelungsstrategie im Übergangsbereich dann erfolgt, wenn der Punkt A die obere Grenze (11) des Hysteresebands überschritten hat.

6. Regeleinrichtung einer n-phasigen Drehmaschine (1), welche mit Weehselstrom mittels eines Spannungswechselrichters (3) versorgt wird, welcher n SPmLL (4) umfasst, die $m^n$ Zustände $V_i$ ($I \in \{1,...,m^n\}$) des Statorphasenspannungsvektors $V_S$ definieren, welche Maschine in dem elektromagnetischen Moment $T_{em}$ und dem Statorfluss $\Theta_S$ mit einem elektromagnetischen Moment $T_{emref}$ und mit einem Statorfluss $\Theta_{Sref}$ durch ein Regelsystem geregelt wird, welches einen Satz von Aufnehmern umfasst, deren erfassten Werte (7, 8, 9) an einen Beobachter (10) übertragen werden, die Ausgänge des Beobachters (10) in einen Rechner (13) eingegeben werden, welcher Rechner (13) am Ausgang Steuersignale (6) abgibt, welche bestimmt sind die SPmLL (4) des Spannungswechselrichters (3) zu steuern, **dadurch gekennzeichnet ist, dass** die Einrichtung das Verfahren nach einem der Ansprüche 1 bis 5 durchführt.

7. Anwendung der Einrichtung nach Anspruch 6 auf eine n-phasige Drehmaschine, welche mit Wechselstrom mittels eines Spannungswechselrichters (3) versorgt wird, welcher n SPmLL (4) umfasst, die $m^n$ Zustände $V_i$ ($I \in \{1,...,m^n\}$) des Statorphasenspannungsvektors $V_S$ definieren, welche Maschine in dem elektromagnetischen Moment $T_{em}$ und dem Statorfluss $\Theta_S$ mit einem elektromagnetischen Moment $T_{emref}$ und mit einem Statorfluss $\Theta_{Sref}$ durch ein Regelsystem geregelt wird, welches einen Satz von Aufnehmern umfasst, deren erfassten Werte (7, 8, 9) an einen Beobachter (10) übertragen werden, die Ausgänge des Beobachters (10) in einen Rechner (13) eingegeben werden, welcher Rechner (13) am Ausgang Steuersignale (6) abgibt, welche bestimmt sind die SPmLL (4) des Spannungswechselrichters (3) zu steuern, wobei die Regeleinrichtung Anspruch 6 entspricht.

# FIG. 1

FIG. 2

FIG. 3

EP 0 812 059 B1

FIG. 3A

FIG. 3B

$\#T_{emref}$

$\#\Phi_{Sref}$

5

11

$Z_5$

$\dot{S}(V_3)$  $\dot{S}(V_2)$

$\dot{S}(V_4)$  $\dot{S}(V_7)$

$\dot{S}(V_6)$

$\dot{S}(V_5)$  $\dot{S}(V_1), \dot{S}(V_8)$

$Z_3$

$Z_1$

$A_{ref}$

$V_p$

$Z_4$

$V_a$

12

$A$

$Z_6$

$Z_2$

6

4

3

4

4

2

$\#T_{em}$  $\#\Phi_S$

7

8

1

10

9

EP 0 812 059 B1

FIG. 3C

FIG. 3D

FIG. 3E